# EUROPÄISCHE PATENTSCHRIFT

(11) **EP 2 302 601 B1**
(45) Veröffentlichungstag und Bekanntmachung des Hinweises auf die Patenterteilung: **29.08.2012**
(21) Anmeldenummer: 09011544.5
(22) Anmeldetag: 09.09.2009
(51) Int. Cl.: G07F 7/10, G06Q 20/00, G06Q 30/00, G06F 1/16, H04W 74/06

(54) **Funkboniersystem**
Wireless order-taking system
Système de commande radio

(43) Veröffentlichungstag der Anmeldung: 30.03.2011
(73) Patentinhaber: Orderman GmbH, 5023 Salzburg (AT)
(72) Erfinder: Kaiser, Gottfried, A-5201 Seekirchen (AT); Blatnik, Franz, A-9523 Villach Landskron (AT)
(74) Vertreter: Karakatsanis, Georgios

(56) Entgegenhaltungen:
- EP-A1- 1 420 326
- WO-A2-02/33986
- WO-A2-03/067369
- FR-A1- 2 926 150
- US-A- 4 777 488
- US-A1- 2004 166 895
- US-A1- 2006 119 508
- US-A1- 2007 266 323
- APURVA KUMAR: "Bluetooth Tutorial" INTERNET CITATION 29. Oktober 2002 (2002-10-29), XP002277988 Gefunden im Internet: URL:http://www-124.ibm.com/developerworks/ opensource/bluehoc/pres/pres3/b t-pres_files/bt-pres.ppt> [gefunden am 2004-04-26]

## Beschreibung

Die vorliegende Erfindung bezieht sich auf ein Funkboniersystem gemäß dem Oberbegriff des Patentanspruchs 1.

Funkboniersysteme gewinnen insbesondere in der Gastronomie zunehmend an Bedeutung. Sie ermöglichen eine Steigerung der Effizienz der Abwicklung der Bestellung des Kunden und gewährleisten eine signifikante Zeitersparnis sowie eine weitgehende Kontrolle über die Abläufe in einem Gastronomiebetrieb.

Hierbei ist es besonders vorteilhaft, wenn im Servicebereich die Angestellten des Gastronomiebetriebs sich in der Nähe vom Gast aufhalten und in ihrer Arbeit durch Personal unterstützt werden, welches die bestellen Speisen und Getränke an die jeweiligen Tische bringt.

Auf diese Weise kann sich das Servicepersonal im Gastraum aufhalten, um sich intensiv um die Gäste zu kümmern, wobei durch die durch ein effektives und effizientes Funkboniersystem gewonnene Zeit mehr Gäste pro Stunde betreut werden können, was sich bei steigender Kundenzufriedenheit positiv auf den erzielbaren Umsatz auswirkt.

Funkboniersysteme umfassen Mobilteile, die im Gastraum vom Servicepersonal bedient werden, beispielsweise um eine Bestellung an ein Computersystem weiterzuleiten. Aus dem Stand der Technik ist bekannt, dass die Mobilteile mit dem Computersystem mittels einer Funkverbindung, eines W-Lan-Netzwerks oder über eine Bluetooth®-Verbindung drahtlos verbunden bzw. verbindbar sind. Bei den bekannten Funkboniersystemen, die auf einem W-Lan-Netzwerk oder auf einer Bluetooth®-Verbindung basieren, können in nachteiliger Weise Verbindungsstörungen auftreten, die die Effizienz des Systems negativ beeinträchtigen. Insbesondere weisen derartige Systeme hohe Latenz- bzw. Responsezeiten auf.

Aus der US 2004/0166895 A1 geht ein mobiles Datenerfassungsgerät hervor, welches jeweils mit einem Netzwerk drahtlos und über ein Kabel verbindbar ist, umfassend eine Anzeigevorrichtung mit integriertem Touchscreen und ein Funkmodul, eine erste CPU und eine zweite CPU, wobei die Anzeigevorrichtung und der Touchscreen der ersten CPU zugeordnet sind und das Funkmodul der zweiten CPU zugeordnet ist.

Aus der US 4,777,488 A geht ein Kommunikationssystem für die Gastronomie hervor, umfassend mehrere Datenerfassungsgeräte, die jeweils einem Tisch zugeordnet sind und mit einem Server drahtlos verbindbar sind, wobei sich die Datenerfassungsgeräte in einem Sleep-Modus befinden, bis einer der Schalter der Datenerfassungsgeräte betätigt wird.

Aus der WO 02/33986 A2 ist ein Verfahren zur Steuerung des Zugriffs auf einen Kommunikationskanal bekannt, im Rahmen dessen die Monilteile eines Funksystems in zwei Gruppen aufgeteilt werden, wobei die eine Gruppe aus den aktiven und die andere Gruppe aus den inaktiven Mobilteilen gebildet wird und wobei die Mobilteile der aktiven Gruppe öfter abgefragt als die inaktiven Mobilteile.

Aus der US 2006/0119508 A1 ist ein Verfahren zur Reduzierung des Stromverbrauchs eines mobilen Geräts im Rahmen dessen Signale zumindest eines Empfängers des mobilen Geräts sowie Signale eines Beschleunigungssensor des mobilen Geräts ausgewertet werden, um einen Geschwindigkeitsvektor zu ermitteln, wobei in Abhängigkeit des Geschwindigkeitsvektors die Funktion der Empfänger des mobilen Geräts unterbrochen wird, um den Stromverbrauch des mobilen Geräts zu reduzieren.

In "Bluetooth Tutorial" (XP002277988) beschreibt A. kumar die Bluetooth-Protokolle über"Master"-Knoten, die die "Slave"-Knoten abfragen, ihre Präsenz überprüfen, und sie endlich aufwecken.

Ferner ist aus der US 2007/0266323 A1 eine Video-Anzeigevorrichtung bekannt, bei der ein Mikroprozessor anhand der Signale mindestens zweier Sensoren, die als Bewegungsmelder ausgeführt sind, aktiviert wird.

Ein Funkboniersystem für die Gastronomie geht aus der WO 03/067369 A2 hervor.

Des Weiteren ist aus der EP 1420326 A1 ein Schaltkreis für eine integrierte Schnittstelle zwischen einem PDA und einem drahtlosen Kommunikationssystem bekannt. Hierbei umfasst das PDA zwei CPUs, wobei eine CPU die andere CPU aktiviert, wenn diese benötigt wird.

Ferner ist aus der FR 2926150 A1 ein Tablet-PC bekannt, der mit einem Kredit-Kartenleser, einen Smartcard-Leser, einen RFID-Lesegerät, einem Tauchscreen und einem biometrischen Sensor ausgestattet ist.

Der vorliegenden Erfindung liegt die Aufgabe zugrunde, ein Funkboniersystem anzugeben, welches auf einer Funkverbindung zwischen den Mobilteilen und einem Computersystem basiert, welche eine sehr geringe Latenzzeit und eine hohe Stabilität aufweist. Insbesondere soll die Übertragung der Daten vom jeweiligen Mobilteil des Funkboniersystems an das Computersystem des Funkboniersystems möglichst synchron mit dem Abschicken der Daten mittels des Mobilteils, d. h. in Echtzeit erfolgen. Das erfindungsgemäße Funkboniersystem soll insbesondere für die Anwendung in der Gastronomie geeignet sein. Zudem soll der Energieverbrauch der Mobilteile reduziert werden.

Des weiteren soll das erfindungsgemäße Funkboniersystem neben der Abwicklung der Bestellung ohne zeitliche Verzögerung und ohne Störungen auch eine bequeme Bezahlung ermöglichen.

Diese Aufgabe wird für ein Funkboniersystem durch die Merkmale des Patentanspruches 1 gelöst. Weitere erfindungsgemäße Ausgestaltungen und Vorteile gehen aus den Unteransprüchen hervor.

Demnach wird ein Funkboniersystem vorgeschlagen, welches ein Computersystem, optional einen mit dem Computersystem verbundenen Router, mindestens eine mit dem Router bzw. mit dem Computersystem direkt verbundene Basisstation und mindestens ein Mobilteil umfasst, wobei das zumindest eine Mobilteil eine Anzeigevorrichtung mit integriertem Touchscreen und ein Funkmodul aufweist, welches mittels einer Funkverbindung mit einer Basisstation zum Austauschen von Daten mit dem Computersystem verbindbar ist.

Hierbei ist erfindungsgemäß vorgesehen, dass das zumindest eine Mobilteil eine erste CPU, die als Haupt-CPU dient, und eine zweite CPU aufweist, wobei die Anzeigevorrichtung und der Touchscreen der ersten CPU zugeordnet sind und das Funkmodul der zweiten CPU zugeordnet ist. Die zweite CPU ist nach dem Start des Systems mittels eines Ein-/Aus Schalters bzw. Knopfs aktivierbar und bleibt anschließend stets aktiv, wobei die erste CPU von der zweiten CPU aktivierbar ist, wenn das Mobilteil zur Eingabe und/oder zur Übertragung von Daten verwendet werden soll.

Durch in das zumindest eine Mobilteil integrierte Speichermittel, in denen vorzugsweise unveränderliche Daten, wie beispielsweise Formulare, Seitenansichten des Menüs sowie das gesamte Bedienungsmenü des Mobilteils gespeichert sind, reduzieren sich die von einem Mobilteil über eine Basisstation an das Computersystem und umgekehrt zu übertragenden Daten auf ein Minimum.

Ferner ist erfindungsgemäß vorgesehen, dass das zumindest eine Mobilteil einen Lage- bzw. Beschleunigungssensor aufweist, anhand dessen Signale, die an die zweite CPU weitergeleitet werden, die zweite CPU die erste CPU aktiviert.

Die Erfindung wird im Folgenden anhand der beigefügten Figuren beispielhaft näher erläutert. Es zeigen:
- Figur 1:: eine schematische Darstellung einer Ausführungsform eines Funkboniersystems gemäß der Erfindung; und
- Figur 2:: eine schematische Darstellung eines gemäß einer Ausführungsform der Erfindung ausgeführten Mobilteils des erfindungsgemäßen Funkboniersystems.

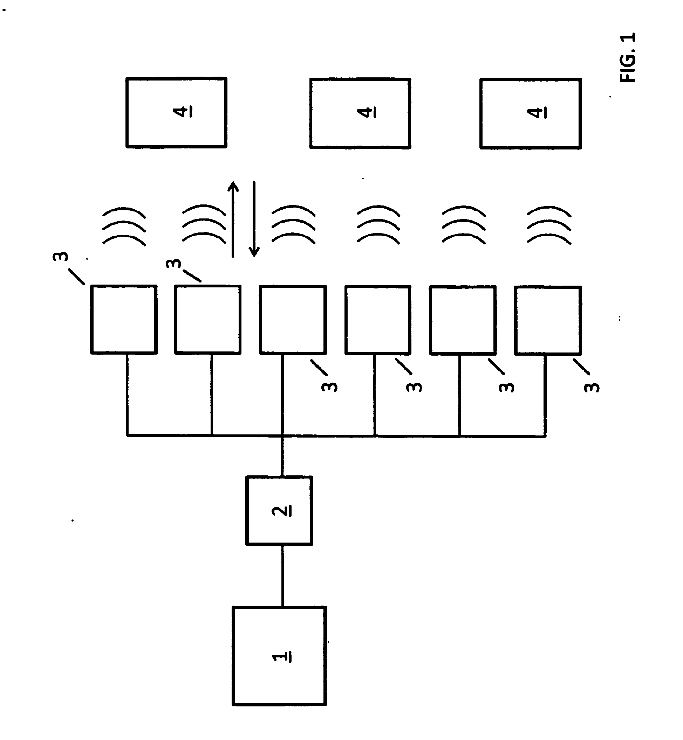

Gemäß der Erfindung und bezugnehmend auf Figur 1 umfasst ein Funkboniersystem ein Computersystem 1, welches vorzugsweise mit einer elektronischen Kasse verbunden ist, optional einen mit dem Computersystem verbundenen Router 2, sowie mindestens eine mit dem Router 2 bzw. mit dem Computersystem 1 verbundene Basisstation 3. Die Verbindung zwischen dem Router 2 und dem Computersystem 1 sowie zwischen der zumindest einen Basisstation 3 und dem Router 2 bzw. dem Computersystem ist vorzugsweise über ein Kabel realisiert, kann aber auch drahtlos ausgeführt sein.

Des weiteren umfasst das erfindungsgemäße Funkboniersystem mindestens ein Mobilteil 4, welches mittels einer Funkverbindung mit einer Basisstation 3 zum Austauschen von Daten mit dem Computersystem 1 verbindbar ist. Das zumindest ein Mobilteil 4 dient gemäß der Erfindung als Ein- bzw. Ausgabegerät.

Die Funkverbindung zwischen einem Mobilteil 4 und einer Basisstation 3 erfolgt über das ISM-Band (Industrial, Scientific and Medical Band), vorzugsweise in einer Frequenz von 433 MHz, sowie 902 MHz.

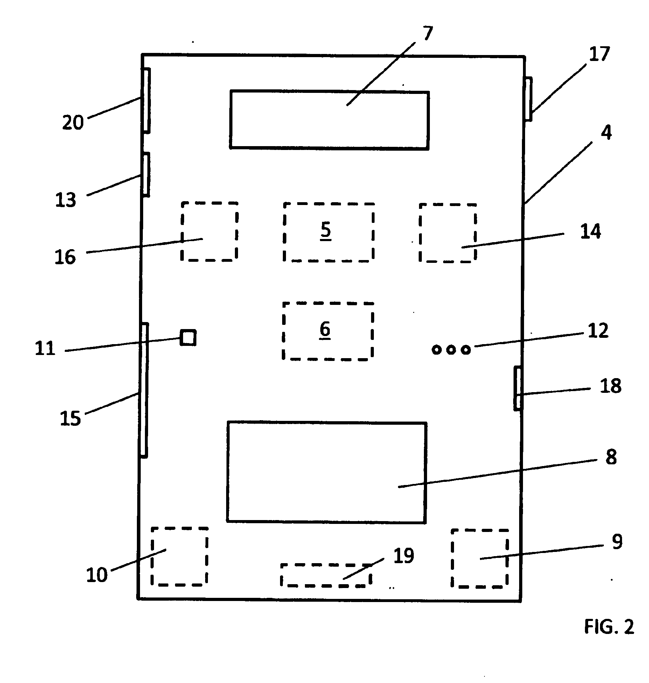

Gemäß der Erfindung und bezugnehmend auf Figur 2 umfasst ein Mobilteil 4 eine erste CPU 5, welche als Haupt-CPU dient sowie eine zweite CPU 6. Das Mobilteil umfasst eine Anzeigevorrichtung (Display) 7, in die ein Touchscreen 8 integriert ist, wobei die Anzeigevorrichtung und der Touchscreen der ersten CPU 5 zugeordnet sind. Des weiteren umfasst ein Mobilteil 4 gemäß der dargestellten Ausführungsform Speichermittel 14 zum Speichern von Daten auf, welche ebenfalls der ersten CPU 5 zugeordnet sind. Die Speichermittel 14 können auch entfallen, was jedoch eine Erhöhung der zu übertragenden Daten und somit eine erhöhte Belastung des Funkboniersystems bedeutet.

Durch die in ein Mobilteil 4 integrierte Speichermittel 14, in denen vorzugsweise unveränderliche Daten, wie beispielsweise Formulare, Seitenansichten des Menüs sowie das gesamte Bedienungsmenü des Mobilteils gespeichert sein, reduzieren sich die von einem Mobilteil 4 über eine Basisstation 3 an das Computersystem 1 und umgekehrt zu übertragenden Daten auf ein Minimum.

Ferner weist ein Mobilteil 4 ein Funkmodul 9 auf, welches der Herstellung einer Verbindung mit einer Basisstation 3 dient, welches von der zweiten CPU 6 gesteuert wird (d.h. das Funkmodul 9 ist der zweiten CPU 6 zugeordnet). Die zweite CPU 6 ist nach dem Start des Systems mittels eines Ein-/Aus Schalters bzw. Knopfs 11 aktivierbar und bleibt stets aktiv, was bedeutet, dass die Funkverbindung auch stets aktiv bleibt, wobei der Energieverbrauch der zweiten CPU 6 geringer ist als der Energieverbrauch der ersten CPU 5.

Gemäß der Erfindung ist vorgesehen, dass die zweite CPU 6 die erste CPU aktiviert, wenn das Mobilteil 4 zur Eingabe und/oder zur Übertragung von Daten verwendet werden soll, beispielsweise, wenn das Mobilteil 4 zur Eingabe einer Bestellung verwendet werden soll. Zu diesem Zweck kann ein Mobilteil 4 einen Lage- bzw. Beschleunigungssensor 10 aufweisen, wobei anhand der Signale des Lage- bzw. Beschleunigungssensors 10, die an die zweite CPU 6 weitergeleitet werden, die zweite CPU 6 die erste CPU 5 aktiviert.

Nach einem vorgegebenen Zeitraum der Inaktivität wird die erste CPU 5 von der zweiten CPU 6 deaktiviert, wodurch der Energieverbrauch des Mobilteils 4 reduziert wird und der Energiespeicher 19, der als herkömmlicher Akku ausgeführt sein kann, welcher die CPUs 5 und 6 sowie die restlichen Komponenten des Mobilteils 4 mit Strom versorgt, entlastet wird.

Vorzugsweise geht die erste CPU 5 beim Deaktivieren in einen Sleep-Modus über. Die erste CPU 5 ist von der zweiten CPU 6 auch dann aktivierbar, wenn durch das Funkmodul 9 Signale empfangen werden, zu deren Verarbeitung die erste CPU 5 erforderlich ist. Ferner kann das Mobilteil 4 einen Schalter aufweisen, mittel dessen die erste CPU 5 aktivierbar ist.

Das Mobilteil 4 kann, wie anhand Figur 2 veranschaulicht, zumindest eine LED 12 aufweisen, wobei durch die zumindest eine LED der Status des Mobilteils, beispielsweise der Zustand des Energiespeichers und der Betriebsmodus angezeigt werden kann; beispielsweise kann eine rot leuchtende LED einen niedrigen Stand des Energiespeichers anzeigen, während eine grün leuchtende LED die Aktivierung des Mobilteils 4, insbesondere die Aktivierung der ersten CPU 5 anzeigen kann; ferner kann eine gelb leuchtende LED den Sleep-Modus der ersten CPU 5 anzeigen.

Der Energiespeicher 19 eines Mobilteils 4 kann auf herkömmliche Art und Weise mittels eines Stromkabels aufgeladen werden; ferner kann der Energiespeicher 19 drahtlos, beispielsweise mittels Induktion oder über ein elektromagnetisches Feld aufgeladen werden.

Gemäß der Erfindung und bezugnehmend auf Figur 2 kann ein erfindungsgemäß ausgeführtes Mobilteil 4 Schnittstellen zur Verbindung mit einem Computersystem, beispielsweise mit dem Computersystem eines Funkboniersystems aufweisen, die der Übertragung von größeren Datenmengen, beispielsweise zum Aktualisieren der Software des Betriebssystems der ersten CPU 5 oder zum Übertragen von Formularen auf das Mobileteil 4 dienen.

Hierbei kann das Mobilteil 4 eine USB-Schnittstelle 13 aufweisen, wobei die USB-Schnittstelle 13 vorzugsweise als Host-Schnittstelle ausgeführt ist. Die Ausführung der USB-Schnittstelle als USB-Host-Schnittstelle 13 resultiert in dem Vorteil, dass externe Anzeigegeräte, externe Festplatten und/oder ein externes Speicherkarten-Lese/Schreibgerät angeschlossen werden kann.

Ferner kann über die USB-Host-Schnittstelle 13 über eine an die USB-Schnittstelle 13 anzuschließende Service-Station eine Ethernet-Netzwerkverbindung realisiert werden. Ferner kann das erfindungsgemäße Mobilteil 4 eine Lese-/Schreibeinrichtung 20 für Speicherkarten, beispielsweise SD-Karten aufweisen. Sowohl die USB-Host-Schnittstelle 13 als auch die Lese-/Schreibeinrichtung für Speicherkarten 20 werden von der ersten CPU 5 gesteuert.

Erfindungsgemäß kann zur Herstellung einer Verbindung mit einem weiteren elektronischen Gerät, beispielsweise zur Herstellung einer Verbindung mit einem weiteren Mobilteil in ein Mobilteil 4 ein Bluetooth®-Modul 16 integriert sein.

Dieses Bluetooth®-Modul ist vorzugsweise mit der ersten CPU 5 verbunden und wird von dieser kontrolliert. Gemäß einer vorteilhaften Ausführungsform der Erfindung kann ein erfindungsgemäßes Mobilteil 4 einen der ersten CPU 5 zugeordneten Barcodescanner für ein- oder zweidimensionale Barcodes aufweisen; dieser optionale Barcodescanner ist in Figur 2 mit dem Bezugszeichen 17 versehen. Alternativ zur Integration eines Barcodescanners in das Mobilteil 4 kann dieses eine Schnittstelle zum Anschließen eines Barcodescanners aufweisen. Sowohl der Barcodescanner 17 als auch die Schnittstelle zum Anschließen eines Barcodescanners sind der ersten CPU 5 zugeordnet.

Das Bluetooth®-Modul 16 kann in vorteilhafter Weise benutzt werden, um eine drahtlose Verbindung zu einem Drucker, vorzugsweise zu einem tragbaren Drucker, der beispielsweise am Gürtel getragen werden kann, verwendet werden. Auf diese Weise kann im Servicebereich ein Rechnungsbeleg gedruckt werden.

Um die Abwicklung der Bezahlung zu vereinfachen, kann vorgesehen sein, dass das Mobilteil 4 eine Leseeinrichtung 15 für Kreditkarten und/oder EC-Karten aufweist. Diese Leseeinrichtung kann als Magnetkarten- und/oder als Chipkartenleseeinrichtung, vorzugsweise in Form eines Slots ausgeführt sein. Ferner kann ein erfindungsgemäß ausgeführtes Mobilteil 4 optional eine der ersten CPU 5 zugeordnete RFID- bzw. NFC-Leseeinrichtung 18 aufweisen, um Daten, die auf einem RFID- bzw. NFC-Label gespeichert sind, auslesen zu können.

Im Rahmen weiterer Ausführungsformen kann zudem vorgesehen sein, dass das Mobilteil 4 zumindest einen biometrischen Sensor aufweist, der beispielsweise als Fingerabdruckscanner ausgeführt sein kann. Auf diese Weise kann die Berechtigung einer Person, das Mobilteil zu bedienen, überprüft werden. Die Kreditkarten- bzw. EC-Kartenleseeinrichtung sowie die RFID- bzw. NFC-Leseeinrichtung und der biometrische Sensor werden von der ersten CPU 5 gesteuert.

Um ein echtzeitfähiges System zu schaffen, ist gemäß der Erfindung vorgesehen, dass eine Basisstation 3 mehrmals in einer Sekunde die dieser Basisstation 3 zugeordneten Mobilteile 4 sequentiell abfrägt, um die seit der letzten Abfrage mittels des jeweiligen Mobilteils 4 eingegebenen Daten zu empfangen und ggf. um Daten an ein Mobilteil 4 zu übertragen. Durch die in ein Mobilteil 4 integrierte Speichermittel 14, in denen unveränderliche Daten, wie beispielsweise Formulare, Seitenansichten des Menüs sowie das gesamte Bedienungsmenü des Mobilteils gespeichert sind, reduzieren sich die von einem Mobilteil über eine Basisstation an das Computersystem 1 zu übertragenden Daten auf ein Minimum; beispielsweise können diese Daten einen ersten Wert enthalten, welcher einem bestimmten Gericht entspricht sowie einen zweiten Wert, welcher die Anzahl oder eine Variante dieses Gerichtes beschreibt. Auf diese Weise kann eine Basisstation 3 die ihr zugeordneten Mobilteile 4 mehrmals pro Sekunde nach zu übertragenden Daten sequentiell abfragen, wodurch ein echtzeitfähiges Funksystem mit geringen zu übertragenden Daten realisiert wird.

Hierbei ist vorgesehen, dass im Rahmen dieser sequentiellen Abfrage am Ende einer Abfrageschleife abgefragt wird, ob weitere Mobilteile 4 in der Zwischenzeit der Basisstation zugeordnet sind. Dies kann beispielsweise im Rahmen eines systeminternen Roamings erfolgen, wenn eine Bedienperson eines Mobilteils 4 sich außerhalb der Reichweite einer ersten Basisstation 3, jedoch in der Reichweite einer zweiten Basisstation 3 befindet, wobei sich in diesem Fall das Mobilteil 4 von der ersten Basisstation 3 abmeldet und sich bei der zweiten Basisstation 3 anmeldet. Durch diese Form der Abfrage seitens einer Basisstation 3 wird gewährleistet, dass neue, einer Basisstation zugeordnete Mobilteile 4 sofort erkannt und berücksichtigt werden.

Die hier geschilderte Vorgehensweise der sequentiellen Abfrage sämtlicher mit einer Basisstation verbundenen Mobilteile resultiert in Verbindung mit den geringen zu übertragenden Daten neben der Realisierung eines Echtzeitfunkboniersystems auch darin, dass die Latenzzeiten mit hoher Genauigkeit errechnet werden können.

## Patentansprüche

1. Funkboniersystem umfassend ein Computersystem (1), mindestens eine mit dem Computersystem (1) direkt oder über einen mit dem Computersystem (1) verbundenen Router (2) verbundene Basisstation (3) und mindestens ein Mobilteil (4), welches eine Anzeigevorrichtung (7) mit integriertem Touchscreen (8) und ein Funkmodul (9) aufweist, welches mittels einer Funkverbindung mit einer Basisstation (3) zum Austauschen von Daten mit dem Computersystem (1) verbindbar ist, wobei das zumindest eine Mobilteil (4) eine erste CPU (5), die als Haupt-CPU dient, und eine zweite CPU (6) aufweist, wobei die Anzeigevorrichtung (7) und der Touchscreen (8) der ersten CPU (5) zugeordnet sind und das Funkmodul (9) der zweiten CPU (6) zugeordnet ist, wobei die zweite CPU (6) nach dem Start des Systems mittels eines Ein-/Aus Schalters bzw. Knopfs (11) aktiviert wird und stets aktiv bleibt und wobei die erste CPU (5) von der zweiten CPU (6) aktivierbar ist, wenn das Mobilteil (4) zur Eingabe und/oder zur Übertragung von Daten verwendet werden soll, wobei das zumindest eine Mobilteil (4) Speichermittel (14) zum Speichern von Daten aufweist, wobei die Speichermittel (14) der ersten CPU (5) zugeordnet sind und in den Speichermitteln (14) unveränderliche Formulare, Seitenansichten des Menüs sowie das gesamte Bedienungsmenü des Mobilteils (4) gespeichert sind, wodurch sich die vom Computersystem (1) über eine Basisstation (3) an das Mobilteil (4) zu übertragenden Daten auf ein Minimum reduzieren, **dadurch gekennzeichnet, dass** die erste CPU (5) von der zweiten CPU (6) aktiviert wird, wenn durch das Funkmodul (9) Signale empfangen werden, zu deren Verarbeitung die erste CPU (5) erforderlich ist und dass das zumindest eine Mobilteil (4) einen Lage- bzw. Beschleunigungssensor (10) aufweist, anhand dessen Signalen, die an die zweite CPU (6) weitergeleitet werden, die zweite CPU (6) die erste CPU (5) aktiviert.

2. Funkboniersystem nach Anspruch 1, **dadurch gekennzeichnet, dass** das zumindest eine Mobilteil (4) eine der ersten CPU (5) zugeordnete USB-Schnittstelle (13) aufweist, die als USB - Host-Schnittstelle (13) ausgeführt ist, wodurch an das Mobilteil (4) externe Anzeigegeräte, externe Festplatten, ein externes Speicherkarten - Lese/Schreibgerät und/oder eine Service-Station zur Herstellung einer Ethernet-Netzwerkverbindung anschließbar sind.

3. Funkboniersystem nach einem der vorangehenden Ansprüche, **dadurch gekennzeichnet, dass** das zumindest eine Mobilteil (4) eine Lese-/Schreibeinrichtung (20) für Speicherkarten, ein Bluetooth®-Modul (16), einen Barcodescanner (17) für ein- oder zweidimensionale Barcodes, einen biometrischen Sensor und/oder eine RFID- bzw. NFC-Leseeinrichtung (18) aufweist, die der ersten CPU (5) zugeordnet sind.

4. Funkboniersystem nach einem der vorangehenden Ansprüche, **dadurch gekennzeichnet, dass** das zumindest eine Mobilteil (4) eine Leseeinrichtung (15) für Kreditkarten und/oder EC-Karten aufweist, welche als Magnetkarten- und/oder als Chipkartenleseeinrichtung ausgeführt ist und der ersten CPU (5) zugeordnet ist.

5. Funkboniersystem nach Anspruch 4, **dadurch gekennzeichnet, dass** über das Bluetooth®-Modul (16) eine drahtlose Verbindung zu einem Drucker herstellbar ist.

6. Funkboniersystem nach einem der vorangehenden Ansprüche, **dadurch gekennzeichnet, dass** die Funkverbindung zwischen dem zumindest einen Mobilteil (4) und einer Basisstation (3) über das ISM-Band erfolgt.

## Claims

1. Wireless order-taking system comprising a computer system (1), at least one base station (3) which is connected with the computer system (1) either directly or via a router (2) connected with the computer system (1) and at least one mobile part (4) comprising a display device (7) with integrated touch-screen (8) and a radio module (9) which is connectable via a radio link with a base station (3) for exchanging data with the computer system (1), wherein the at least one mobile part (4) comprises a first CPU (5) serving as the main CPU and a second CPU (6), wherein the display device (7) and the touch-screen (8) are assigned to the first CPU (5) and the radio module (9) is assigned to the second CPU (6), wherein the second CPU (6) is activated upon system start-up by means of an ON-OFF switch or button (11) and remains always active and wherein the first CPU (5) can be activated by the second CPU (6) if the mobile part (4) shall be used for inputting and/or transmitting data, wherein the at least one mobile part (4) comprises storage means (14) for storing data, wherein the storage means (14) are assigned to the first CPU (5), and non-changeable forms, page views of the menu and the entire operating menu of the mobile part (4) are stored in the storage means (14), causing the data to be transmitted from the computer system (1) via the base station (3) to the mobile part (4) to be reduced to a minimum,
**characterised in that**
the first CPU (5) is activated by the second CPU (6) when signals are received by the radio module (9) for the processing of which the first CPU (5) is required and **in that** the at least one mobile part (4) comprises a position/acceleration sensor (10) by means of which signals forwarded to the second CPU (6), the second CPU (6) activates the first CPU (5).

2. Wireless order-taking system according to claim 1, **characterised in that** the at least one mobile part (4) comprises a USB interface (13) assigned to the first CPU (5) which is implemented as a USB host interface (13), thereby allowing external display devices, external hard disks, an external memory card reading/writing device and/or a service station for establishing an Ethernet network connection to be connected with the mobile part (4).

3. Wireless order-taking system according to one of the preceding claims, **characterised in that** the at least one mobile part (4) comprises a reading/writing unit (20) for memory cards, a Bluetooth® module (16), a barcode scanner (17) for one or two-dimensional barcodes, a biometric sensor and/or a RFID or NFC reading facility (18) assigned to the first CPU (5).

4. Wireless order-taking system according to one of the preceding claims, **characterised in that** the at least one mobile part (4) comprises a reading unit (15) for credit cards and/or EC cards which reading unit is implemented as a magnetic card reader and/or chip card reader and is assigned to the first CPU (5).

5. Wireless order-taking system according to claim 4, **characterised in that** a wireless link can be established via the Bluetooth® module (16) to a printer.

6. Wireless order-taking system according to one of the preceding claims, **characterised in that** the radio link is set up via the ISM band between the at least one mobile part (4) and a base station (3).

## Revendications

1. Système de commande radio comprenant un système informatique (1), au moins une station de base (3) reliée au système informatique (1) directement ou par l'intermédiaire d'un routeur (2) relié au système informatique (1) et au moins une partie mobile (4), qui présente un dispositif d'affichage (7) avec écran tactile (8) intégré et un module radio (9), lequel peut être relié au moyen d'une liaison radio à une station de base (3) pour l'échange de données avec le système informatique (1), lequel comprend au moins une partie mobile (4), une première CPU (5) qui fait office de CPU principale, et une seconde CPU (6), le dispositif d'affichage (7) et l'écran tactile (8) étant attribués à la première CPU (5) et le module radio (9) étant attribué à la seconde CPU (6), la seconde CPU (6) étant activée après le démarrage du système au moyen d'un interrupteur marche/arrêt ou d'un bouton (11) resté toujours actif et la première CPU (5) pouvant être activée par la seconde CPU (6) lorsque la partie mobile (4) doit être utilisée pour l'entrée et/ou pour à transmission de données, la au moins une partie mobile (4) présentant des moyens de stockage (14) pour le stockage de données, les moyens de stockage (14) étant attribués à la première CPU (5) et des formulaires non modifiables, des vues latérales du menu et ainsi que l'ensemble du menu de commande de la partie mobile (4) étant sauvegardés dans les moyens de stockage (14), les données à transmettre par le système informatique (1) via une station de base (3) à la partie mobile (4) se réduisant à un minimum, **caractérisé en ce que** la première CPU (5) est activée par la seconde CPU (6) lorsqu'on reçoit par le module de radio (9) des signaux pour le traitement desquels la première CPU (5) est indispensable et **en ce que** la au moins une partie mobile (4) présente un capteur de position et d'accélération (10), à l'aide des signaux duquel, qui sont transmis à la seconde CPU (6), la seconde CPU (6) active la première CPU (5).

2. Système de commande radio selon la revendication 1, **caractérisé en ce que** la au moins partie mobile (4) présente une interface USB (13) associée à la première CPU (5), laquelle interface est réalisée sous forme d'interface USB-Host (13), de telle sorte que des appareils d'affichage externes, des disques durs externes, un appareil de lecture/enregistrement externe à carte mémoire et/ou une station de service peuvent être raccordés à la partie mobile (4) pour établir une liaison de réseau Ethernet.

3. Système de commande radio selon l'une des revendications précédentes, **caractérisé en ce que** la au moins une partie mobile (4) présente un dispositif de lecture/d'enregistrement (20) pour des cartes mémoire, un module Bluetooth (16), un scanner de code-barres (17) pour un code-barres en une ou deux dimensions, un capteur biométrique et/ou un dispositif de lecture RFID ou NFC (18), qui sont associés à la première CPU (5).

4. Système de commande radio selon l'une des revendications précédentes, **caractérisé en ce que** la au moins une partie mobile (4) présente un dispositif de lecture (15) pour les cartes de crédit et/ou des cartes EC, qui est réalisé sous forme de dispositif de lecture de carte magnétique et/ou sous forme de dispositif de lecture de carte à puce et est associé à la première CPU (5)

5. Système de commande radio selon la revendication 4, **caractérisé en ce qu'**une liaison sans fil peut être établie avec une imprimante par le module Bluetooth® (16) .

6. Système de commande radio selon l'une des revendications précédentes, **caractérisé en ce que** la liaison radio entre la au moins une partie mobile (4) et une station de base (3) s'effectue par la bande ISM.
